# EUROPEAN PATENT SPECIFICATION

(11) **EP 2 498 498 B1**
(45) Date of publication and mention of the grant of the patent: **20.07.2016**
(21) Application number: 12158244.9
(22) Date of filing: 06.03.2012
(51) Int. Cl.: H04N 9/04, H01L 27/30, H04N 9/73, H04N 5/369

(54) **Quantum dot image sensor with dummy pixels used for intensity calculations**
Quantenpunktbildsensor mit Dummy-Pixeln für Intensitätsberechnungen
Capteur d'image à points quantiques avec pixels factices utilisés pour des calculs d'intensité

(30) Priority: 08.03.2011 US 201161450406 P
(43) Date of publication of application: 12.09.2012
(73) Proprietor: BlackBerry Limited, Waterloo, ON N2K 0A7 (CA)
(72) Inventor: Choi, Yun Seok, Waterloo, Ontario N2L 3W8 (CA); Townsend, Graham Charles, Menlo Park, CA 94025 (US)
(74) Representative: Gill Jennings & Every LLP

(56) References cited:
- EP-A1- 2 180 513
- EP-A2- 2 487 913
- US-A1- 2007 272 836
- US-A1- 2008 315 104
- US-A1- 2010 283 866
- US-A1- 2011 019 004

## Description

### FIELD

Embodiments described herein relate generally to an image sensor and, more particularly, to an image sensor having one or more quantum dot layers containing dummy pixels used for intensity calculations.

### BACKGROUND

Digital photography is a form of photography that uses an image sensor formed out of an array of photosensitive pixels to capture scene images. As opposed to film photography, which exposes light sensitive film, digital photography makes use of the photosensitive pixels to convert light photons into accumulated charge. Typically each pixel is also designed to be photosensitive to only a certain range of light, which in most cases is one of red, green or blue light. Corresponding intensities of each color component are determined by measuring the amount of accumulated charge in each color of pixel. Full color pixels in the resulting digital image are represented by a value for each of the red, green and blue color components.

US 2008/0315104 A1 describes a color image sensing apparatus and method of processing which can remove an infrared (IR) ray influence without a separate IR blocking filter. The apparatus includes a color filter array including a plurality of color filter units, each of which includes a red-pass filter, a green-pass filter and a blue-pass filter, of which at least one passes IR rays.

US 2007/0272836 A1 describes a photoelectric conversion apparatus including a plurality of pixels, color filters disposed on a light-receiving surface of at least part of the plurality of pixels, infrared filters disposed on a light-receiving surface of the rest of the plurality of pixels, and a cut-off filter provided on the light-receiving surface. Each pixel includes a photoelectric conversion element having photoelectric conversion sensitivity in a wavelength range including a visible light region and an infrared light region.

EP 2180513 A1 describes a near-infrared/color photodetector made in monolithic form in a lightly-doped substrate of a first conductivity type covering a holder and comprising a face on the side opposed to the holder. The photodetector comprises at least first and second photodiodes for the storage of electric charges photogenerated in the substrate.

EP 2487913 A2 describes an imaging device having increased low light sensitivity by combining quantum dot sensitivity to visible and infrared light. A camera unit generates a processed digital image by augmenting color data with infrared image data according to the level of ambient light exposure.

US 2010/0283866 A1 describes an image input processing apparatus and method. The apparatus includes an optical band separating filter, a color filter of four-color arrangement, an optical sensor section that generates an imaging signal, a data separating section that separates the pixel data into pieces of pixel data of four colors, an infrared separating section that performs infrared separation by a subtraction using the equivalence among pieces of pixel data of the four colors after separation, first and second integration sections, and a camera control processing section that determines which integration values from the first and second integration section is used.

### BRIEF DESCRIPTION OF DRAWINGS

For a better understanding of the described embodiments and to show more clearly how such embodiments may be carried into effect, reference will now be made, by way of example, to the accompanying drawings in which:
FIG. 1 is a block diagram of a mobile device having a camera unit in one example implementation;
FIG. 2 is a block diagram of an example embodiment of a communication subsystem component of the mobile device shown in FIG. 1;
FIG. 3 is a block diagram of a node of a wireless network in one example implementation;
FIG. 4 is a block diagram of an example embodiment of the image sensor sub-unit of the camera unit shown in FIG. 1;
FIG. 5A is a schematic drawing of an example embodiment of the camera sensor of the camera unit shown in FIG. 4;
FIG. 5B is a schematic drawing of another example embodiment of the camera sensor of the camera unit shown in FIG. 4;
FIG. 5C is a schematic drawing of another example embodiment of the camera sensor of the camera unit shown in FIG. 4;
FIG. 5D is a schematic drawing of another example embodiment of the camera sensor of the camera unit shown in FIG. 4;
FIG. 6A is a schematic drawing of another example embodiment of the camera sensor of the camera unit shown in FIG. 4;
FIG. 6B is a schematic drawing of another example embodiment of the camera sensor of the camera unit shown in FIG. 4;
FIG. 6C is a schematic drawing of another example embodiment of the camera sensor of the camera unit shown in FIG. 4;
FIG. 6D is a schematic drawing of another example embodiment of the camera sensor of the camera unit shown in FIG. 4; and
FIG. 7 is a flow chart showing a method for controlling the camera unit of the mobile device shown in FIG. 1.

### DETAILED DESCRIPTION OF EMBODIMENTS

Many image sensors commonly used in digital photography are composed of a plurality of pixels that are exposed to light primarily in the visible light range. One or more cutoff filters, typically including at least an infrared cutoff filter, may also be included to remove light from outside the visible range. Typically, the sensor pixels will be exposed to a prior color component, such as red, green or blue light. The pixels may themselves be photosensitive to light of one of the primary color components or, alternatively, may only be exposed to light primarily of one of the color components, such as with the use of one or more color filters.

Image data generated by the pixels may generally represent a scene image exposed by the image sensor, but the quality of the resulting image can depend on a number of different factors, including the intensity and color temperature of the ambient light used to illuminate the scene. Accordingly, in some cases, the image may be under-exposed or overexposed depending on the intensity of the ambient lighting. In other cases, unsightly color casts or other color artifacts may appear in the exposed image due to variances or imbalances in color temperature.

To correct for the different characteristics of the ambient light, the resulting scene image may be processed, such as by an image sensor processor associated with the image sensor, and one or more correction factors may be calculated based the image data generated by the pixels of the image sensor. The correction factors are then used to adjust image data generated by the image pixels. For example, the correction factors may be used to adjust the exposure value or white balance of the resulting digital image.

However, as these correction factors are calculated based on characteristics of the light in the visible light range only, the correction factors may not be satisfactorily representative of the ambient light over the entire spectrum and may also not take into account the effect that light outside the visible spectrum may have on the resulting digital image. In either of these two cases, less than optimal correction factors may be calculated.

One or more quantum dot layers may be incorporated into a photosensitive pixel area of an image sensor in order to extend the range of the image sensor beyond just the visible range. Accordingly, image sensors that incorporate quantum dot materials into the photosensitive pixel area may be sensitive to detect both visible light and light outside the visible light range. As some examples, quantum dot layers in the image sensor may be sensitive to infrared light or ultraviolet light, as well as other ranges of light. Detecting the intensity of light outside of (either below or above or both) the visible light range, as well as the intensity of visible light, allows for a more accurate determination of characteristics of the ambient light. This in turn enables a more accurate calculation of correction factors for adjustment or other processing of image data.

In accordance with an aspect of an embodiment of the invention, there is provided a camera unit for generating a processed digital image represented by a plurality of image pixels according to claim 8.

In accordance with an aspect of another embodiment of the invention, there is provided a method for controlling a camera unit to generate a processed digital image represented by a plurality of image pixels according to claim 1.

The dependent claims show further embodiments of the invention.

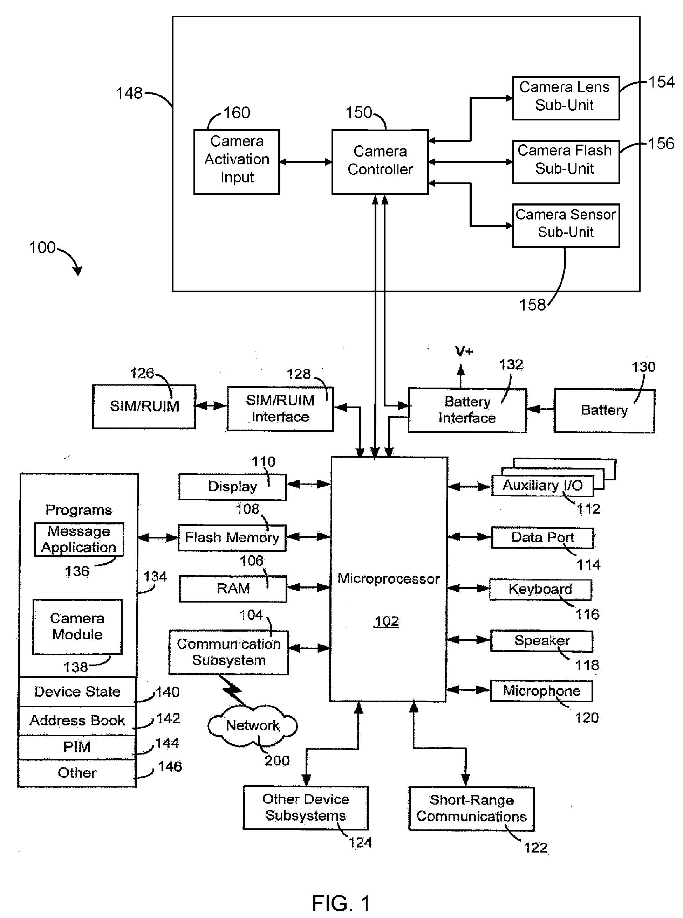

To aid the reader in understanding the general structure and operation of the mobile device, reference will be made to FIGS. 1 to 3. However, it should be understood that embodiments of the mobile device are not limited only to that which is described herein. Examples of different mobile devices generally include any portable electronic device that includes a camera module such as cellular phones, cellular smart-phones, wireless organizers, personal digital assistants, computers, laptops, handheld wireless communication devices, wireless enabled notebook computers, wireless Internet appliances, and the like. These mobile devices are generally portable and thus are battery-powered. However, the described embodiments are not limited only to portable, battery-powered electronic devices. While some of these devices include wireless communication capability, others are standalone devices that do not communicate with other devices.

Referring to FIG. 1, shown therein is a block diagram of a mobile device 100 in one example implementation. The mobile device 100 comprises a number of components, the controlling component being a microprocessor 102, which controls the overall operation of the mobile device 100. Communication functions, including data and voice communications, are performed through a communication subsystem 104. The communication subsystem 104 receives messages from and sends messages to a wireless network 200. In this exemplary implementation of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that the new standards will have similarities to the network behaviour described herein, and it will also be understood by persons skilled in the art that the embodiment described herein is intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with the mobile device 100 is a GSM/GPRS wireless network in one example implementation, other wireless networks can also be associated with the mobile device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

The microprocessor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list. Operating system software used by the microprocessor 102 is typically stored in a persistent store such as the flash memory 108, which can alternatively be a read-only memory (ROM) or similar storage element (not shown). Those skilled in the art will appreciate that the operating system, specific device applications, or parts thereof, can be temporarily loaded into a volatile store such as the RAM 106.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services can include: web browsing and messaging such as e-mail, voice mail, SMS, and MMS. More advanced services can include: point of sale, field service and sales force automation. The SIM card/RUIM 126 includes a processor and memory for storing information. Once the SIM card/RUIM 126 is inserted into the SIM/RUIM interface 128, the SIM card/RUIM 126 is coupled to the microprocessor 102. In order to identify the subscriber, the SIM card/RUIM 126 contains some user parameters such as an International Mobile Subscriber Identity (IMSI). An advantage of using the SIM card/RUIM 126 is that a subscriber is not necessarily bound by any single physical mobile device. The SIM card/RUIM 126 can store additional subscriber information for a mobile device as well, including datebook (or calendar) information and recent call information. Alternatively, user identification information can also be programmed into the flash memory 108.

The mobile device 100 is a battery-powered device and includes a battery interface 132 and uses one or more rechargeable batteries in a battery module 130. The battery interface 132 is coupled to a regulator (not shown), which assists the battery module 130 in providing power V+ to the mobile device 100. Alternatively, the battery module 130 can be a smart battery as is known in the art. Smart batteries generally include a battery processor, battery memory, switching and protection circuitry, measurement circuitry and a battery module that includes one or more batteries, which are generally rechargeable. In either case, the one or more batteries in the battery module 130 can be made from lithium, nickel-cadmium, lithium-ion, or other suitable composite material.

In addition to operating system functions, the microprocessor 102 enables execution of software applications 134 on the mobile device 100. The subset of software applications 134 that control basic device operations, including data and voice communication applications, will normally be installed on the mobile device 100 during manufacturing of the mobile device 100.

The software applications 134 include a message application 136 that can be any suitable software program that allows a user of the mobile device 100 to send and receive electronic messages. Various alternatives exist for the message application 136 as is well known to those skilled in the art. Messages that have been sent or received by the user are typically stored in the flash memory 108 of the mobile device 100 or some other suitable storage element in the mobile device 100. In an alternative embodiment, some of the sent and received messages can be stored remotely from the device 100 such as in a data store of an associated host system that the mobile device 100 communicates with. For instance, in some cases, only recent messages can be stored within the device 100 while the older messages can be stored in a remote location such as the data store associated with a message server. This can occur when the internal memory of the device 100 is full or when messages have reached a certain "age", i.e. messages older than 3 months can be stored at a remote location. In an alternative implementation, all messages can be stored in a remote location while only recent messages can be stored on the mobile device 100.

The mobile device 100 further includes a camera module 138, a device state module 140, an address book 142, a Personal Information Manager (PIM) 144, and other modules 146. The camera module 138 is used to control camera operations for the mobile device 100, including processing image data and dummy pixel data generated by a hybrid camera sensor. Additionally, the camera module 138 may be used to control a maximum camera current that can be drawn from the battery module 130 without adversely affecting the operation of the mobile device 100, such as causing brown-out, reset, affecting the operation of any applications being performed by the mobile device 100 and the like.

The device state module 140 provides persistence, i.e. the device state module 140 ensures that important device data is stored in persistent memory, such as the flash memory 108, so that the data is not lost when the mobile device 100 is turned off or loses power. The address book 142 provides information for a list of contacts for the user. For a given contact in the address book 142, the information can include the name, phone number, work address and email address of the contact, among other information. The other modules 146 can include a configuration module (not shown) as well as other modules that can be used in conjunction with the SIM/RUIM interface 128.

The PIM 144 has functionality for organizing and managing data items of interest to a subscriber, such as, but not limited to, e-mail, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

Additional applications can also be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and can provide enhanced on-device functions, communication-related functions, or both. For example, secure communication applications can enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path can, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the mobile device 100.

The short-range communications subsystem 122 provides for communication between the mobile device 100 and different systems or devices, without the use of the wireless network 200. For example, the subsystem 122 can include an infrared device and associated circuits and components for short-range communication. Examples of short-range communication include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the microprocessor 102. The microprocessor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as a touch screen, mouse, track ball, infrared fingerprint detector, or a roller wheel with dynamic button pressing capability. The keyboard 116 is preferably an alphanumeric keyboard and/or telephone-type keypad. However, other types of keyboards can also be used. A composed item can be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

The mobile device 100 also includes a camera unit 148 that allows a user of the mobile device 100 to take pictures. The camera unit 148 includes a camera controller 150, an ambient light sensor sub-unit 152, a camera lens sub-unit 154, a camera flash sub-unit 156, a camera sensor sub-unit 158 and a camera activation input 160. The camera controller 150 configures the operation of the camera unit 148 in conjunction with information and instructions received from the microprocessor 102. It should be noted that the structure shown for the camera unit 148 and the description that follows is only one example of an implementation of a camera on a mobile device.

The camera controller 150 receives an activation signal from the camera activation input 160 when a user indicates that a picture is to be taken. In alternative embodiments, the microprocessor 102 receives the activation signal. Typically, the camera activation input 160 is a push-button that is depressed by the user when a picture is to be taken. However, the camera activation input 160 can also be a switch or some other appropriate input mechanism as is known by those skilled in the art. In some embodiments, after executing the camera module 138 in the flash memory 108, the camera controller 150 also receives a signal from the camera module 138 indicating that camera mode has been initiated on the mobile device 100.

In some embodiments, an ambient light sensor sub-unit 152 separate from the camera sensor sub-unit 158 is used to estimate an intensity of the ambient light that illuminates the scene image. For example, the ambient light sensor sub-unit 152 may contain a layer of photovoltaic material, which generates a voltage proportional to the ambient light intensity. Alternatively, a photoresistive layer having an electrical resistance that varies proportional to light exposure may be included in the ambient light sensor sub-unit 152. However, in alternative embodiments, the intensity of the ambient light may be determined using the camera sensor sub-unit 158, in which case the ambient light sensor sub-unit 152 may be omitted from the camera unit 148.

Depending on the particular configuration that is employed, the camera lens sub-unit 154 includes a lens along with a shutter and/or aperture along with components to open and close the shutter and/or aperture to expose an image sensor in the camera sensor sub-unit 158. The shutter and/or aperture may be opened once upon actuation of the camera activation input 160. In some embodiments, the shutter and/or aperture stays open so long as the mobile device 100 is in the camera mode, in which case image data is continuously or semi-continuously generated. Alternatively, the shutter and/or aperture may be opened and closed each time a picture is taken so that the image sensor is exposed only once. Additionally, or instead of these components, the camera lens sub-unit 154 can include components that provide telescopic functionality to allow the user to take a "zoomed-in" or "zoomed-out" picture.

The camera flash sub-unit 156 includes a camera flash to generate light having an appropriate magnitude or lumen to increase the quality of the images that are obtained by the camera unit 148. In some cases, the light output of the camera flash sub-unit 156 can be limited by the maximum current draw available from the battery module 130 for flash purposes. For example, to avoid excessive "battery slump", a maximum camera flash current can be enforced. The camera flash sub-unit 156 is typically based on LED flash technology, but in some embodiments can also incorporate phosphor materials and/or quantum dot layers to adjust the spectral quality of the generated flash light. The camera flash sub-unit 156 can be operated in a camera flash mode of operation of the camera unit 148, while being deactivated in other modes of operation.

The camera sensor sub-unit 158 captures and processes raw image data using an image sensor, which is then processed in an image sensor processor to generate a processed digital color image. The image sensor can be fabricated using, for example, CMOS sensor technology, CCD sensor technology as well as other sensor technologies. The image sensor can incorporate raw image pixels that are sensitive to light in different parts of the visible spectrum. For example, some raw image pixels are sensitive to blue light, some pixels are sensitive to green light, and other pixels are sensitive to red light. The image sensor can also incorporate "dummy" pixels that have different spectral sensitivities from the raw image pixels and generate dummy pixel data used for various intensity calculations, as will be explained in more detail below. The image sensor processor receives and processes the color image and dummy pixel data to generate the processed digital image. Other functions can also be performed by the image sensor processor.

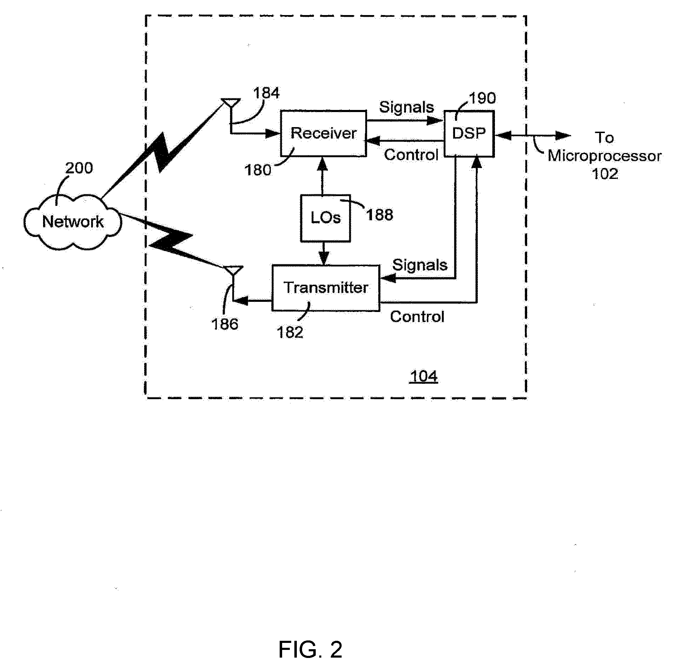

Referring now to FIG. 2, a block diagram of the communication subsystem component 104 of FIG. 1 is shown. Communication subsystem 104 comprises a receiver 180, a transmitter 182, one or more embedded or internal antenna elements 184, 186, Local Oscillators (LOs) 188, and a processing module such as a Digital Signal Processor (DSP) 190.

The particular design of the communication subsystem 104 is dependent upon the network 200 in which mobile device 100 is intended to operate, thus it should be understood that the design illustrated in FIG. 2 serves only as one example. Signals received by the antenna 184 through the network 200 are input to the receiver 180, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 190. In a similar manner, signals to be transmitted are processed, including modulation and encoding, by the DSP 190. These DSP-processed signals are input to the transmitter 182 for digital-to-analog (D/A) conversion, frequency up conversion, filtering, amplification and transmission over the network 200 via the antenna 186. The DSP 190 not only processes communication signals, but also provides for receiver and transmitter control. For example, the gains applied to communication signals in the receiver 180 and the transmitter 182 may be adaptively controlled through automatic gain control algorithms implemented in the DSP 190.

The wireless link between the mobile device 100 and a network 200 may contain one or more different channels, typically different RF channels, and associated protocols used between the mobile device 100 and the network 200. An RF channel is a limited resource that must be conserved, typically due to limits in overall bandwidth and limited battery power of the mobile device 100.

When the mobile device 100 is fully operational, the transmitter 182 is typically keyed or turned on only when the transmitter 182 is sending to the network 200 and is otherwise turned off to conserve resources. Similarly, the receiver 180 is periodically turned off to conserve power until the receiver 180 is needed to receive signals or information (if at all) during designated time periods.

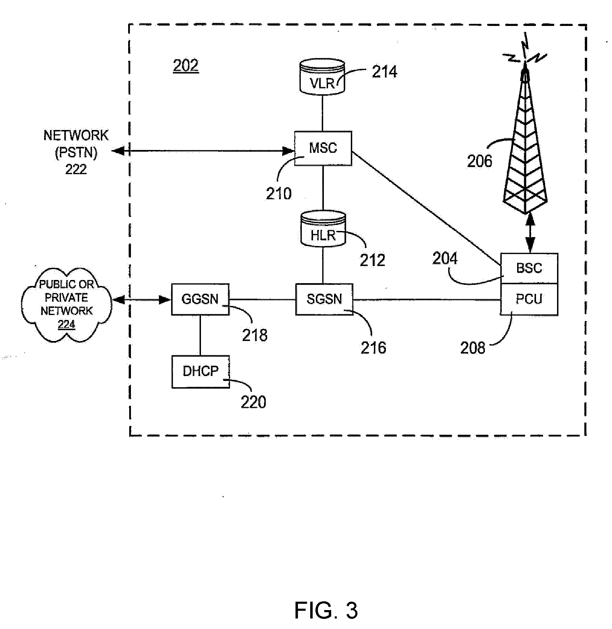

Referring now to FIG. 3, a block diagram of a node of a wireless network is shown as 202. In practice, the network 200 comprises one or more nodes 202. The mobile device 100 communicates with a node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to the public or private network (Internet) 224 (also referred to herein generally as a shared network infrastructure) represents the data path for GPRS capable mobile devices. In a GSM network extended with GPRS capabilities, the BSC 204 also contains a Packet Control Unit (PCU) 208 that connects to the SGSN 216 to control segmentation, radio channel allocation and to satisfy packet switched requirements. To track mobile device location and availability for both circuit switched and packet switched management, the HLR 212 is shared between the MSC 210 and the SGSN 216. Access to the VLR 214 is controlled by the MSC 210.

The station 206 is a fixed transceiver station. The station 206 and the BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within the cell via the station 206. The fixed transceiver equipment normally performs such functions as modulation and possibly encoding and/or encryption of signals to be transmitted to the mobile device in accordance with particular, usually predetermined, communication protocols and parameters, under control of a controller. The fixed transceiver equipment similarly demodulates and possibly decodes and decrypts, if necessary, any communication signals received from the mobile device 100 within the cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in the location areas in the VLR 214 for which the MSC 210 is responsible. Further the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within wireless network 200 by keeping track of the location of each mobile device 100. The SGSN 216 also performs security functions and access control for data traffic on the network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through the PCU 208 and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and the mobile devices 100 cannot exchange data without first performing a GPRS Attach to an APN that the mobile device 100 has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a mobile device 100 is not using the PDP Context allocated to the mobile device 100, the PDP Context can be de-allocated and the IP address returned to the IP address pool managed by the DHCP server 220.

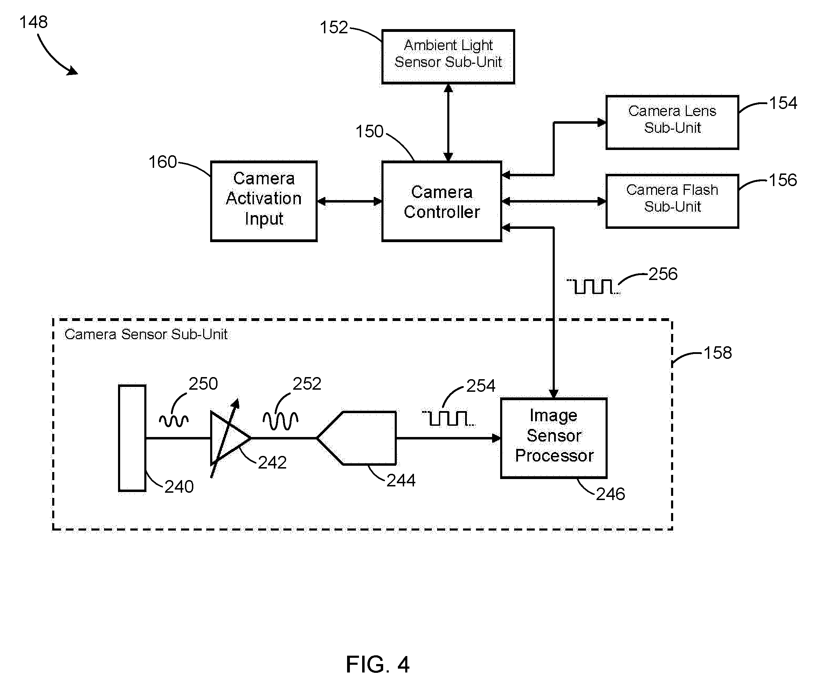

Referring now generally to FIGS. 4-7, the operation of the camera unit 148 is explained in greater detail. For convenience, the following embodiments of the camera unit 148 are described in the context of a camera unit for a mobile communication device, such as mobile device 100 shown in FIG. 1. However, it should be appreciated that the described embodiments may also be suitable for other types and configurations of camera modules, including video camera modules, and are not necessarily limited just to still or video camera modules incorporated into mobile communication devices. For example, the described embodiments may be equally suited for stand-alone digital camera modules, video camera modules and the like.

As shown in FIG. 4, the camera sensor sub-unit 158 includes both hardware components and software components for capturing and processing digital color images. In one example implementation, the camera sensor sub-unit 158 is configured to generate a digital image represented an exposed scene and includes an image sensor 240, variable gain amplifier (VGA) 242, digital to analog converter (DAC) 244 and image sensor processor (ISP) 246.

As will be appreciated, in variant embodiments, some of the components of the camera sensor sub-unit 158 shown in FIG. 4 can be re-allocated to one or more different modules of the camera unit 148. For example, some of the software and/or processing components of the camera sensor sub-unit 158, such as the image sensor processor 246, can be realized in other camera sub-units or as standalone components. The particular association of components in FIG. 4 is merely illustrative.

Image sensor 240 comprises a pixilated, photosensitive array used to capture scene images when exposed to light, such as by opening and closing a camera shutter (not shown) within the camera lens sub-unit 154. For the duration that the camera shutter is opened, a camera lens (not shown) focuses light through an aperture onto the image sensor 240. The image sensor 240 captures the exposed image initially as raw sensor pixel data encoded into a sensor output signal 250.

The light used to expose the image sensor 240 may be provided by one or more light sources. In some cases, the image may be exposed using only a source of ambient light. Alternatively, to increase overall scene illumination, a mixture of both ambient light and light generated artificially from a secondary source, such as a flash module included in camera flash sub-unit 156. Each different light source may also have different characteristics, such as intensity and color temperature.

The image sensor 240 can be synthesized on a single image sensor chip that has a plurality of pixels. Each pixel in the photosensitive array includes at least one crystalline quantum dot layer that is photosensitive to a particular frequency range of the light spectrum. As will be appreciated, the photosensitivity of the individual pixels to different wavelengths of light may depend generally on the bandgap energy of the quantum dots or quantum dot layers used to fabricate the pixel. For crystalline quantum dot pixels, the bandgap energy is controllable with good precision based on the lattice spacing of the underlying crystalline quantum dot layer. Thus, photosensitivity can be controlled as a function of lattice spacing during fabrication.

In alternative embodiments, image sensor 240 may be realized instead using a charge-coupled device (CCD) or complementary metal oxide semiconductor (CMOS) sensor. Because the light sensitivity of CCD and CMOS sensors is typically not as controllable as quantum dot light sensors, color filters can be layered on top of the underlying CCD or CMOS substrate to provide selective photosensitivity to different wavelengths of light. In this way, the image sensor 240 again generates sensor output signal 250 consisting of raw sensor pixel data specific to different regions of the input light spectrum.

The particular implementation of the image sensor 240 can vary in different embodiments to fit the application, depending on the desired performance of the camera unit 148. While each above-described example implementation of the image sensor 240 may be possible, quantum dot image sensors providing superior light gathering efficiency may be preferred for some embodiments.

In some embodiments, the photosensitive array included in image sensor 240 may include different types or categorizations of pixels, depending on the particular functionality provided by the pixel or the particular way in which the data generated by the pixel is processed. To realize the different functionality of use, each type or categorization may be realized with different structural configurations, as will be described.

Some pixels included in the image sensor 240 of a first type (hereafter referred to as "raw image pixels") are configured to generate raw color image data. The raw color image data may be used to represent a scene image exposed by the image sensor 240, and may be processed into the digital image by the camera sensor sub-unit 158. For example, the raw color image data may include intensity values of one or more primary color components used to represent full color pixels in the resulting digital image.

Other pixels included in the image sensor 240 of a second type (hereafter referred to as "dummy pixels") are configured to generate supplemental image data. The supplemental image data generated by the dummy pixels may be generally different from the raw color image data generated by the raw image pixels. For example, the supplemental image data may be generated by the dummy pixels to represent a characteristic of the one or more light sources used to expose the image sensor 240 to the scene image. In some embodiments, the supplemental image data does not directly provide a primary color component value used to represent full colors in the processed digital image.

Each of the raw image pixels is sensitive to light within a specified range of the visible light spectrum to generate the raw color image data comprising primary color component values. By combining several raw image pixels that are sensitive to corresponding specified ranges of the visible light spectrum, the color image data may be generated in a way that represents the exposed scene image. For example, the raw image pixels may include one or more pixels fabricated to detect blue light predominantly within a range of wavelengths of between about 400nm to 500nm (hereafter referred to as "blue raw image pixels"). Likewise some of the raw image pixels may be used to detect green light predominantly within about 500nm to 600nm (hereafter referred to as "green raw image pixels"), while still other of the raw image pixels may be sensitive to light predominantly within about 600nm to 800nm (hereafter referred to as "red raw image pixels"). However, as will be appreciated, the sensitivities noted specifically above for the blue, green and red raw image pixels are illustrative only and may be differed in variant different embodiments.

The dummy pixels may be sensitive to light in the visible light spectrum or, alternatively, may be sensitive to light outside the visible light spectrum. In some embodiments, each dummy pixel is sensitive to a specified light range of the visible light spectrum. For example, similar to the raw image pixels, some of the dummy pixels may be fabricated to detect blue light predominantly within a range of wavelengths of between about 400nm to 500nm (hereafter referred to as "blue dummy pixels"). Likewise some of the dummy pixels may be used to detect green light predominantly within about 500nm to 600nm (hereafter referred to as "green dummy pixels"), while still other of the dummy pixels may be sensitive to red light predominantly within about 600nm to 800nm (hereafter referred to as "red dummy pixels"). In some example embodiments, one or more of the dummy pixels (hereafter referred to as "full spectrum dummy pixels") may be sensitive to substantially the entire visible light range within about 400nm to 800nm.

One or more dummy pixels may also be sensitive to light in a light range other than one of the light ranges of the visible light spectrum noted above. As will be further described below, although one or more dummy pixels may be sensitive to light outside the visible light spectrum, the supplemental data generated by such dummy pixels may still represent a characteristic of the light source used to expose the scene image. The raw color image data generated by the raw image pixels may, therefore, also be processed by the supplemental image data generated by such dummy pixels.

Some dummy pixels may be sensitive to light with wavelengths longer than the visible light range. For example, some dummy pixels (hereafter referred to as "infrared dummy pixels") may be sensitive to one or more different sub-bands of infrared light, including any of the near infrared (NIR), short-wavelength infrared (SWIR), mid-wavelength infrared (MWIR), long-wavelength infrared (LWIR) or far infrared (FIR) sub-bands. However, as will be appreciated, the sensitivities noted specifically above for the infrared dummy pixels are illustrative only and may vary in different embodiments.

Some of the dummy pixels included in the image sensor 240 may also be sensitive to light with wavelengths shorter than the visible light spectrum. For example, some of the dummy pixels (hereafter referred to as "ultraviolet dummy pixels") may be sensitive to one or more different sub-bands of ultraviolet light, including any of the near ultraviolet (NUV), middle ultraviolet (MUV), and far ultraviolet (FUV) sub-bands. The sensitivities noted specifically above for the ultraviolet dummy pixels are again illustrative only and can vary in different embodiments.

Different embodiments of the image sensor 240 may include different types and combinations of dummy pixels. For example, the image sensor 240 may include only red, green and blue dummy pixels. Alternatively, the image sensor 240 may include dummy pixels of one or more types in addition to red, green and blue dummy pixels. Thus, in some embodiments, the image sensor 240 may include red, green and blue dummy pixels together any combination of infrared dummy pixels, ultraviolet dummy pixels and full spectrum dummy pixels. In further alternative embodiments, the image sensor 240 may include any combination of infrared, ultraviolet and full spectrum dummy pixels, while not including any red, green or blue dummy pixels.

The image sensor 240 is fabricated to include both a plurality of raw image pixels and a plurality of dummy pixels as described above. The pluralities of raw image and dummy pixels are realized on a silicon substrate forming part of an integrated circuit for carrying read-out data from each of the pixels. To maximize pixel density on the image sensor, both the raw image pixels and the dummy pixels may be proximately situated on the silicon substrate.

The plurality of raw image pixels is arranged into a pixel array on the substrate, which may be square or rectangular shaped. The array of raw image pixels may be understood as forming a first pixel layer supported on the photosensitive surface of the image sensor. Each of the raw image pixels in the pixel array may comprise one or more quantum dot layers or, alternatively, one or more color filter layers to realize the particular light sensitivity of that raw image pixel. As these quantum dot or color filter layers may be stacked in a directed extending away from the silicon substrate, the first pixel layer may be either a single physical layer or a composite layer formed from one or more different physical layers. In some embodiments, the red, green and blue raw image pixels may be distributed throughout the pixel array approximately evenly so as to balance the primary color component values in the raw color image data.

In some embodiments of the image sensor 240, the dummy pixels are interspersed among the raw image pixels in the first pixel layer. Accordingly, the dummy pixels and the raw image pixels may be fabricated on the image sensor 240 in a common pixel layer. The spatial arrangement and relative proportions of the raw image pixels and the dummy pixels may vary according to the desired functionality or application of the image sensor 240. In an alternative of this first embodiment, only dummy pixels sensitive to light within the visible light range are interspersed among the plurality of distributed sensor pixels on the same layer.

In some alternative embodiments of the image sensor 240, the dummy pixels may be arranged into a second pixel layer (again either a single or composite physical layer) of the pixel array supported on the substrate. As will be explained below, the second pixel layer may either overlie or underlie the first pixel layer. Alternatively, the dummy pixels may be split between a second pixel layer supported by (e.g., overlying) the first pixel layer and a third pixel layer supporting (e.g. underlying) the first pixel layer directly above the silicon substrate.

The density of dummy pixels in the second and optional third pixel layer may be less than the density of the raw image pixels in the first pixel layer. However, by providing the second and optional third pixel layer in stacked relation with the first pixel layer, the dummy pixels may be included in the image sensor 240 without adding to the surface area occupied by the pixel array on the substrate of the image sensor 240. Accordingly, the overlapping first, second and optional third pixel layers may realize a greater density of pixels than configurations of the image sensor 240 where only one pixel layer including the raw image pixels is included.

In some embodiments, the second pixel layer overlying the first pixel layer may include one or more ultraviolet dummy pixels. Since ultraviolet light is higher energy than visible light, the ultraviolet dummy pixels in the overlying second pixel layer may generally absorb the higher energy ultraviolet light, while substantially passing lower energy visible light to the raw image pixels included in the first pixel layer underlying the second pixel layer. This example configuration of the image sensor 240 allows for a relatively compact distribution of pixels, either raw image or dummy pixels, which are sensitive to both visible and ultraviolet light.

In some embodiments, the optional third pixel layer underlying the first pixel layer may include one or more infrared dummy pixels. Since infrared light is lower energy than visible light, the raw image pixels in the overlying first pixel layer may generally absorb the higher energy visible light, while substantially passing the lower energy infrared light to the infrared dummy pixels included in the optional third pixel layer underlying the first pixel layer. This example configuration of the image sensor 240 allows for a relatively compact distribution of pixels, either raw image or dummy, which are sensitive to both visible and infrared light.

In some further alternative embodiments, both a second pixel layer containing one or more ultraviolet dummy pixels and a third pixel layer containing one or more infrared dummy pixels may be included, as described above. This example configuration of the image sensor 240 allows for a relatively compact distribution of pixels, either raw image or dummy, which are sensitive to ultraviolet, visible and infrared light simultaneously.

In some further alternative embodiments, the second pixel layer may additionally include any combination of red, green, blue or full spectrum dummy pixels.

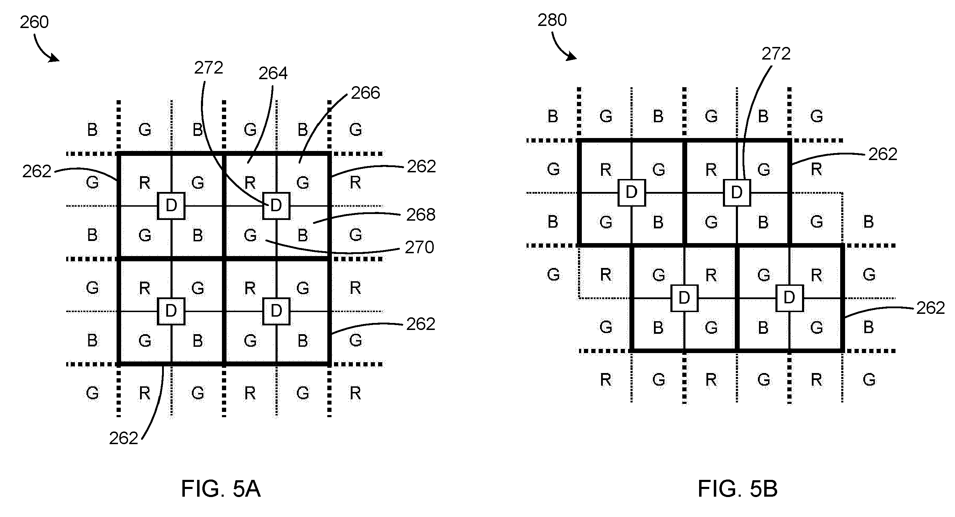

Referring now to FIGS. 5A-5D, some example pixel patterns for the image sensor 240 (FIG. 4) are shown. In each of the example pixel patterns, the first pixel layer of the image sensor 240 comprises a combination of blue (B), green (G), and red (R) raw image pixels. As shown, the blue, green and red raw image pixels are arranged according to a standard Bayer color filter array (CFA). In the standard Bayer color filter array, green pixels outnumber red and blue pixels each by two-to-one, as explained further below, and therefore provide more inherent color redundancy than the red and blue pixels. In some embodiments, pixel patterns other than the Bayer CFA may be used in the first pixel layer, although cost effective fabrication processes for the standard Bayer color may be readily available.

In each illustrated pixel pattern, one or more additional pixel layers comprising dummy pixels is also shown. The additional pixel layer of dummy pixels may, in different embodiments, overlie or underlie the first pixel layer of raw image pixels. As will be appreciated from the figures, the surface area covered by the dummy pixels in the additional pixel layer, each individual dummy pixel denoted by "D", overlaps the surface area occupied by the first pixel layer array of sensor pixel blocks on the substrate.

As described above, by overlying ultraviolet dummy pixels and underlying infrared dummy pixels, with respect to the first pixel layer, the dummy pixels in the additional pixel layer overlying the first pixel layer may have minimal impact on the amount of light absorbed by the raw image pixels. In the same way, the raw image pixels in the first pixel layer may have minimal impact on the light absorption of any dummy pixels located in an additional dummy pixel layer underlying the first pixel layer.

FIG. 5A illustrates a pixel pattern 260 formed from a repeating 2x2 sensor pixel block 262 arranged in a regular grid formation, i.e. square edge-aligned, in the first pixel layer. Each pixel block 262 may uniformly include a red raw image pixel 264, a green raw image pixel 266, a blue raw image pixel 268 and another green raw image pixel 270, in clockwise order starting with the red raw image pixel 264 in the upper-left quadrant of the pixel block 262. Accordingly, the first pixel layer in the pixel pattern 262 resembles the commonly employed Bayer CFA. One dummy pixel 272 is positioned to overlap every repeating pixel block 262 at a vertex that is common to the four pixels of the pixel block 262.

FIG. 5B illustrates a pixel pattern 280 that may be used as an alternative to pixel pattern 260 of FIG. 5A. The pixel pattern 280 is similar to the pixel pattern 260 shown in FIG. 5A, except that the 2x2 pixel blocks 262 are now arranged in a staggered grid formation, i.e. because the vertical edge of a given 2x2 pixel block 262 is aligned with the horizontal edge of an adjacent 2x2 pixel block 262 at the horizontal edge midpoint. One dummy pixel 272 is again positioned to overlap every repeating 2x2 pixel block 262 at a vertex common to the four pixels of the 2x2 pixel block 262. Consequently, each dummy pixel 272 is also staggered with respect to the dummy pixel 272 located in an adjacent 2x2 pixel block 262.

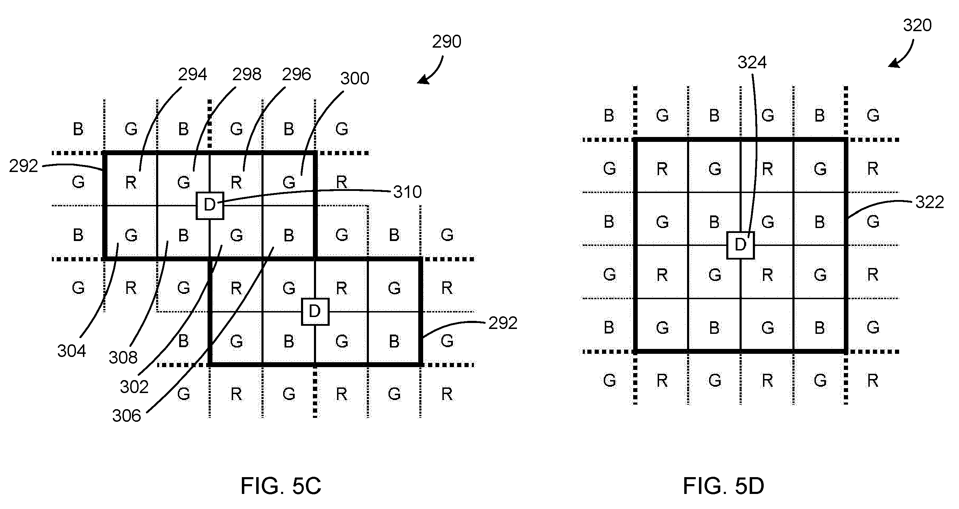

FIG. 5C illustrates a pixel pattern 290 that may be used as a further alternative to the pixel pattern 260 shown in FIG 5A or the pixel pattern 280 shown in FIG. 5B. The pixel pattern 290 is formed from a repeating 2x4 pixel block 292 arranged in a staggered grid formation, i.e. because the short edge of a given 2x4 pixel block is aligned with the long edge of an adjacent 2x4 pixel block 292 at the long edge midpoint. Each pixel block 292 is similar to a combination of two adjacent 2x2 pixel blocks 262 of FIG. 5A, but with the dummy pixels 272 replaced with a single dummy pixel 310. More specifically, each pixel block 292 includes two red pixels 294 and 296, four green pixels 298, 300, 302, and 304, and two blue pixels 306 and 308. The single dummy pixel 310 is positioned to overlap every repeating 2x4 rectangular pixel block 292 at the intersection of a first line segment joining the midpoints of the two long edges of the 2x4 pixel block 292 and a second line segment joining the midpoints of the two short edges of the 2x4 pixel block 292.

FIG. 5D illustrates a pixel pattern 320 that may be used as a further alternative. The pixel pattern 320 is formed from a 4x4 pixel block 322 arranged in a regular grid formation. Each pixel block 322 is similar to a combination of four pixel blocks 262 of FIG. 5A, but with the dummy pixels 272 replaced with a single dummy pixel 324. More specifically, each pixel block 322 includes four red pixels, four blue pixels, and eight green pixels arranged in the Bayer CFA pattern. The single dummy pixel 324 is positioned to overlap every repeating 4x4 square pixel block 322 at the intersection of a first line segment joining the midpoints of a first pair of opposite edges and a second line segment joining the midpoints of a second pair of opposite edges.

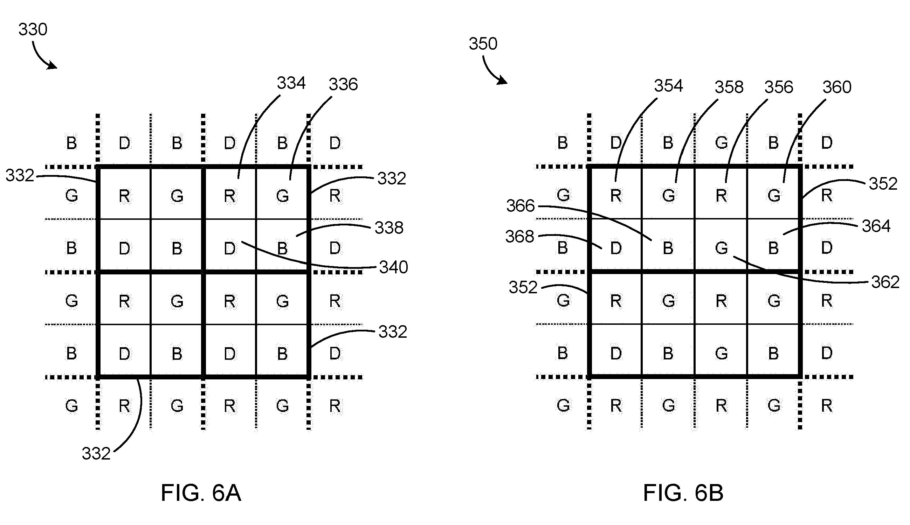

Referring now to FIGS. 6A-6D, there are illustrated some example pixel patterns for the image sensor 240, in which the dummy pixels are interspersed among the raw image pixels in the pixel array in a common pixel layer. The placement of dummy pixels is based on one or more modified Bayer color filters, as shown. The particular pixel pattern and corresponding relative proportions of the blue, green and red raw image pixels and the dummy pixels are variable in different configurations of the image sensor 240 depending on different performance requirements of the image sensor 240. For example, increasing the relative proportion of dummy pixels in relation to the raw image pixels can allocate more pixels in the image sensor 240 to the generation of supplemental image data and thereby provide increased flexibility in terms of image attribute adjustment.

However, for a given fixed number of raw image pixels, the increased proportion of dummy pixels is provided by a corresponding decrease in the number of raw image (e.g., R, G or B) pixels. With reduced raw image pixels, the color resolution of the image sensor 240 will generally decrease. Accordingly, an increased amount of supplemental image data sometimes will be traded off against decreased color resolution in the raw color image data. The relative proportions of each type of pixel, dummy or raw image, is variable in different embodiments to meet different performance requirements.

Additionally, while the particular kind of raw image pixel to be substituted with a dummy pixel is variable, green pixels may be preferred for this purpose in some embodiments because the green pixels tend to outnumber red and blue pixels in image sensors, as explained further below. Substitution of a green raw image pixel therefore may have less impact on the color resolution of the image sensor 240 relation to substitution of a blue or red raw image pixel, which are outnumbered two-to-one by the green raw image pixels in the standard Bayer CFA.

The example filter configurations shown in FIGS. 6A-6D are each based on the Bayer filter pattern, but modified to have some of the redundant green pixels substituted for dummy pixels. However, it should be appreciated that the image sensor 240 may have red and/or blue raw image pixels substituted for dummy pixels in some cases. Alternatively, the image sensor 240 may use a filter pattern other than the Bayer filter pattern as the base pixel pattern in which dummy pixels are substituted.

FIG. 6A illustrates a pixel pattern 330 formed from a repeating 2x2 pixel block 332 in a regular grid formation, i.e. square edge-aligned. Each pixel block 332 uniformly includes a red raw image pixel 334, a green raw image pixel 336, a blue raw image pixel 338 and a dummy pixel 340, in clockwise order starting with the red raw image pixel 334 in the upper-left quadrant of the pixel block 332. Accordingly, the pixel pattern 330 is similar to the commonly employed Bayer CFA. However, the pixel pattern 330 differs from the Bayer CFA in that one of the redundant green pixels in the Bayer CFA is replaced with the dummy pixel 340. Thus, relative to the Bayer CFA, one of every four raw color image pixels in the pixel pattern 330 has been replaced with a dummy pixel 340. The relative positioning of each pixel is also not fixed and may be varied in different embodiments. For example, the positioning of green raw image pixel 336 and the dummy pixel 340 may be swapped in some example configurations.

FIG. 6B illustrates a pixel pattern 350 formed from a repeating 2x4 pixel block 352 in a regular grid formation, i.e. rectangular edge-aligned. Each pixel block 352 includes two red raw image pixels 354 and 356, three green raw image pixels 358, 360, and 362, two raw image blue pixels 364 and 366, and a single dummy pixel 368 positioned in the lower-left octant of the pixel block. The relative positioning of each pixel is also not fixed and may be varied in different embodiments. For example, the positioning of dummy pixel 368 and may be swapped with any of green pixels 358, 360 and 362 in some cases or, alternatively, with any other pixel included in the pixel block 352.

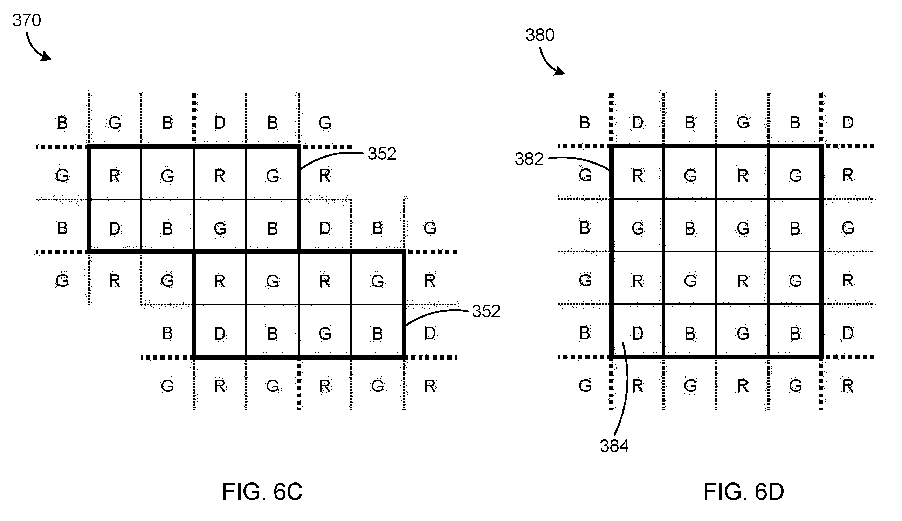

FIG. 6C illustrates a pixel pattern 370 that may be used as an alternative to the pixel pattern 330 in FIG. 6A or the pixel pattern 350 of FIG. 6B. The pixel pattern 370 is similar to the pixel pattern 350 shown in FIG. 5B, except that the repeating 2x4 pixel blocks 352 are now arranged in a staggered grid formation, i.e. because the short edge of a given 2x4 pixel block 352 is aligned with the long edge of an adjacent 2x4 pixel block 352 at the long edge midpoint. Again, the relative positioning of each pixel is also not fixed and may be varied in different embodiments.

As seen from FIGS. 6B and 6C, the pixel patterns 350 and 370 are similar to two laterally adjacent pixel blocks 332, but one of every eight RGB color pixels from the Bayer CFA pattern has been replaced with a dummy pixel 368 in the pixel pattern 350 or 370. Again the relative positioning of the red, green, blue and dummy pixels is not fixed and may be varied in different embodiments.

FIG. 6D illustrates a fourth alternative pixel pattern 380 for the image sensor 240, in which one of every sixteen pixels is allocated to a dummy pixel. More specifically, pixel pattern 380 is formed from a repeating 4x4 pixel block 382 arranged in a regular grid formation. Each pixel block 382 includes four red pixels, seven green pixels, four blue pixels and a single dummy pixel 384.

While four example pixel patterns 330, 350, 370 and 380 have been described and illustrated, the image sensor 240 is not limited to just these specifically described or illustrated pixel patterns. Still other pixel patterns may be implemented involving variations, as noted above, based on the relative positioning and/or proportions of raw image and dummy pixels in the image sensor 240. The choice of a particular pixel pattern may depend on selected performance constraints of the image sensor 240, such as accurate determination of the light source characteristics. To increase the volume of supplemental image data relative to the volume of raw color image data, one of the pixel patterns (e.g., shown in FIGS. 5A-5D or FIGS. 6A-6D) having a larger relative proportion of dummy pixels may be used. Similarly for increased color resolution, a pixel pattern having a smaller relative proportion of dummy pixels may be chosen.

Referring back to FIG. 4, image sensor 240 generates the sensor output signal 250 encoding sensor data by sequentially sensing the electrical charge accumulated in each raw image pixel and each dummy pixel of the image sensor 240 after exposure of the scene. The sensor output signal 250 is amplified by VGA 242 to generate an amplified sensor output signal 252. Digital to analog converter 244 then digitizes the amplified sensor output signal 252 to produce digital image data 254.

The digital image data 254 comprises both raw image data generated by the raw image pixels and supplemental image data generated by the dummy pixels. For example, digital image data 254 may consist of a bitstream of different single component pixel values, with each single component pixel value sensed from a different raw image pixel of the image sensor 240. The single component pixel values may be one of a plurality of primary color component values, such as a raw red component value, a raw green component pixel value, or a raw blue component pixel value.

Supplemental dummy component values will also be included in the digital image data 254. Each supplemental dummy component value may be generated by a different dummy pixel and may represent an intensity of light measured in the particular range of values of light corresponding to the selective photosensitivity of that particular dummy pixel.

The digital image data 254, comprising both raw image data and supplemental image data, is provided to the ISP 246 for processing to generate a processed digital image comprising a plurality of processed image pixels. The particular processing operations performed by the ISP 246 may depend on a selected mode of operation for the camera unit 148, which the camera controller 150 communicates to the ISP 246 using the mode control signal 256.

The ISP 246 is configured to parse the digital image data 254 to separate the raw image data from the supplemental image data, and to process the raw image data using the supplemental image data to generate the processed digital image having one or more adjusted attributes. Generally, the processing performed by the ISP 246 may include de-mosaicing the raw image data, which comprises a single-component value associated with each raw image pixel, into full color image data represented by a set of pre-processed color component values associated with each of a plurality of pre-processed image pixels. The pre-processed color component values for each of the pre-processed image pixels are associated with an image pixel in the processed digital image. The pre-processed color component values may be defined, for example, according to the commonly employed RGB, YUV, HSV, or CMYK color representations or using any other suitable color representation scheme. The ISP 246 further uses the supplemental image data to calculate one or more characteristics of the light source or sources used to expose the image sensor 240. The ISP 246 may then adjust the set of pre-processed color component values associated with each pre-processed image pixel based on at least one of the calculated characteristics of the light source to generate the processed digital image.

In one example implementation, the ISP 246 de-mosaics the single color component values in the digital image data 254, before adjustment using the supplemental image data, to calculate a set of pre-processed color component values associated with each image pixel in the processed digital image. To illustrate, the ISP 246 may de-mosaic the digital image data 254 generated by the pixel pattern 260 shown in FIG. 5A, as follows, to generate pre-processed color image data comprising a plurality of associated pre-processed color component values.

For each raw image pixel in the image sensor 240, full color component values may be calculated by averaging each pixel of a certain color within the 3x3 grid centered on a given raw image pixel. Accordingly, looking at the red raw image pixel 264, an associated green component color may be computed as the average of the left and right adjacent green pixels. Similarly an associated blue component may be computed as the average of the four diagonally adjacent blue raw image pixels. A similar process may be employed for calculating component values associated with the green raw image pixel 266, and blue raw image pixel 268.

The ISP 246 may then generate the processed digital image by adjusting the pre-processed color component values associated with at least one of the image pixels in the processed digital image. The adjustment to be made to the pre-processed color component values is determined based on supplemental image data generated from one or more dummy pixels. The way in which supplemental image data is used to adjust the at least one pre-processed image pixel varies according to the selected mode of operation for image adjustment. For each image pixel of the processed digital image that does not have its associated plurality of pre-processed color component values adjusted by the ISP 246, these pre-processed color component values may be equivalent to the color component values of that image pixel of the processed digital image. However, in some cases, even if not adjusted using the supplemental image data, the ISP 246 may still perform other processing functions, such as gamma correction or edge enhancement.

In a first example mode of operation, the ISP 246 is configured to operate in an automatic exposure mode to generate a processed digital image with an optimized effective exposure index. Pre-processed color component values calculated by the ISP 246 from de-mosaicing single color component values in the raw image data have not been corrected to take into account the characteristics of the light source used to expose the scene image. Accordingly, if the intensity of the ambient light of the light source is relatively low, a digital image formed using only pre-processed color component values will tend to appear under-exposed. Likewise, where the intensity of the ambient light of the light source is relatively high, the image formed using only pre-processed color component values may appear overexposed.

To generate a processed digital image with an optimized effective exposure index, the ISP 246 is configured to process the supplemental image data to calculate the intensity value of the ambient light used to expose the scene image. Calculating an intensity value of ambient light is commonly known as light metering. The ISP 246 may use the supplemental image data generated from one or more ultraviolet dummy pixels, full spectrum dummy pixels and/or infrared dummy pixels in the calculation of the intensity value of the ambient light. Advantageously, using supplemental image data generated from dummy pixels sensitive to a broad range of light that includes ultraviolet and infrared can give a more reliable calculation of intensity values of the ambient light than simply using pixels sensitive to visible light.

Based on the intensity value of the ambient light calculated from the supplemental image data, the ISP 246 is further configured to calculate, an exposure adjustment factor for adjusting the plurality of pre-processed color component values. The exposure adjustment factor may be determined such that, when applied to the pre-processed color component values, the resulting processed digital image may have an optimized effective exposure value. The ISP 246 is configured to scale, for at least one image pixel of the processed digital image, each of the plurality of pre-processed color component values associated with the image pixel of the processed digital proportionately by the exposure adjustment factor. In an exposure adjustment, the adjustment factor used is common to all pre-processed color component values and has the effect of compensating for under-exposure or overexposure of the scene image.

The adjustment of exposure of an image is commonly known as the ISO setting of the camera. The ISP 246 may be further configured to follow commonly accepted ISO settings, such as those set out in ISO 12232:2006 standard, when calculating the common adjustment factor by which to scale each of the plurality of pre-processed color component values to optimize the effective exposure value of the processed digital image. For example, the ISP 246 may use intensity values of ambient light calculated from the supplemental image data to determine an optimal ISO setting, for example ISO 100, 200, 400, 800, 1600 or any ISO setting, and to adjust the plurality of pre-processed color component values proportionately by a common adjustment factor corresponding to the chosen ISO setting.

In a first example sub-mode of exposure adjustment, dummy pixels dispersed over substantially the entire area of the array of pixels covering the image sensor 240 are used to calculate the intensity value of ambient light, in which values obtained from each dummy pixel are weighted equally. In this example sub-mode, the supplemental image data is used to determine the intensity of the ambient light of the entire scene image.

In a second example sub-mode of exposure adjustment, supplemental image data generated by dummy pixels located in one or more specific physical sub-regions of the image sensor 240, corresponding to one or more regions of a scene image, are weighted differently from dummy pixels in other regions, in calculating the intensity value of ambient light. For example, dummy pixels in a specific sub-region of the image sensor 240 may be given a heavier weight when the corresponding region of the scene image is brighter, for example illuminated by a light source such as the sun.

In a second example operational mode, the ISP 246 is configured to operate in an automatic white balance mode to generate the processed digital image with an optimal effective white balance. Variances in the relative intensities of the ambient light in a plurality of ranges across the visible light range, commonly known as color temperature, may cause color casts in an image exposed by the image sensor 240. The pre-processed color component values calculated by the ISP 246 from de-mosaicing single color component values in the raw image data will generally not have been corrected to take into account the variances in the relative intensities of the ambient light in a plurality of ranges in the visible light range. If unadjusted, the processed image may be perceived by a human observer to have unsightly blue, orange, or sometimes even green hues.

To generate a processed digital image with an optimized effective white balance, the ISP 246 is configured to process the supplemental image data to calculate the relative intensity values of the ambient light of the light source used to expose the scene image. In one embodiment, the ISP 246 uses supplemental image data generated from a plurality of dummy pixels in the visible light range to detect the color temperature of the light source used to expose the scene image. In order to detect relative intensities, at least some of the supplemental data used by the ISP 246 are generated by red, green or blue dummy pixels that are sensitive to a light range that is narrower than the entire visible light range. Furthermore, in order to detect the color temperature for the entire visible light range, the aggregate of ranges of sensitivities of the dummy pixels that are generating the supplemental data used by the ISP 246 may cover the entire visible light range. For example, the ISP 246 may use supplemental data generated by one or more blue dummy pixels, one or more green dummy pixels, and one or more red dummy pixels in order to calculate the color temperature of the ambient light used to expose the scene image.

Based on the relative intensities of the ambient light in a plurality of visible light ranges, the ISP 246 is configured to further calculate a plurality of adjustment factors corresponding to a plurality of narrow ranges of the visible light ranges in order to further generate a processed digital image that has an optimal effective exposure value. Preferably, the ISP 246 is configured to calculate white balance adjustment factors corresponding to each of the plurality of pre-processed color component values. The ISP 246 is also configured to scale, for at least one pixel of the processed digital image, each of the plurality of pre-processed color component values associated with the image pixel of the processed digital image by the corresponding white balance adjustment factors.

In one example operational white balance sub-mode, the ISP 246 is configured to perform auto white balancing by calculating white balance adjustment factors using supplemental image data generated by the dummy pixels when the pixels of the image sensor expose a scene image. However, as will be appreciated, different colored objects in the scene image may skew the determination of the color temperature of the ambient light.

In a second exemplary white balance sub-mode, the ISP 246 is configured to perform custom white balance by calculating white balance adjustment factors using supplemental data generated by the dummy pixels when the pixels of the image sensor expose a gray reference object. The white balance adjustment factors calculated in this first step are then used to scale each of the plurality of pre-processed color component values generated from raw color image data representing an exposed scene image. This sub-mode may require a user to perform a two-part process. The first part consists of exposing a gray reference object to calculate white balance adjustment factors and the second part consists of exposing a scene image.

In a third example white balance sub-mode, the ISP 246 is configured to perform auto white balancing by calculating white balance adjustment factors using supplemental data generated by dummy pixels located in one or more specific physical sub-regions of the pixel array of the image sensor 240. The sub-region of the image sensor 240 should correspond to a region of the scene image containing an object suitable for use as a gray reference. For example, a user may select a sub-region of the scene image to be used as a gray reference for white balance adjustment.

For each of the embodiments described above for generating a processed digital image with an optimized effective white balance using supplemental image data generated by red, green and blue light dummy pixels, the ISP 246 may be further configured to also use supplemental image data generated by ultraviolet dummy pixels, infrared dummy pixels, or a combination thereof in addition to red, green and blue dummy pixels to further calculate the color temperature. While UV and IR light are outside the visible light range and do not by themselves cause color casts, data pertaining to relative intensities in these ranges may provide useful additional indicators as to the relative intensities at the upper and lower ranges of the visible light range. For example, relative intensities data calculated from supplemental data generated by UV and/or IR dummy pixels may be used to verify that the ISP 246 has correctly calculated an appropriate color temperature for a scene.

In another example mode of operation, the ISP 246 is configured to produce a stream of raw color image data representing a plurality of successive images exposed by the image sensor. In this mode, the stream of successively exposed images may be used for capturing video. Alternatively it may be used for displaying on the display 110 (FIG. 1) the scene image currently captured through the lens to allow the user to appropriately frame objects of the scene. This method of displaying the captured image on the display 110 is commonly known as "live view".

In this mode, the ISP 246 is also configured to produce a stream of supplemental image data representing the plurality of successive images exposed by the image sensor. Unlike the single image mode described above where supplemental image data for one exposed scene image is used to adjust pre-processed color component values determined by the ISP 246 from the same scene image, in the case of an image sensor producing a plurality of successive images, the ISP 246 may use supplemental image data from a first image to adjust some attribute of a second image.

Specifically, the ISP 246 may be configured to process the stream of supplemental image data to determine at least one image attribute or characteristic of light source of the first image and, adjusting at least one image attribute of the second image. For example, the ISP 246 may calculate a first set of exposure adjustment factors from supplemental image data representing intensity values of the ambient light used to expose the scene in the first image. After determining pre-processed color component values from raw images data generated form the second image, the ISP 246 scales the second image pre-processed color component values by the first set of exposure adjustment factors to obtain a processed digital image of the second exposed image. The ISP 246 may further be configured to perform any set of adjustment in operating modes described above using supplemental image data from a first image to adjust pre-processed color component values determined from raw color image data of a second image. For example the ISP 246 may use first image supplemental data to adjust the exposure and white balance of the second image to generate a processed digital image of the second image.

Since supplemental image data generated from the first exposed image is not used to adjust pre-processed color component values determined from raw color image data from the same first image, the processor-intensive processes of calculating adjustment factors and subsequently adjusting a plurality of pre-processed color component values need not be executed immediately before exposure of a second image. This may allow for a faster rate at which successively images are exposed. For example, in one embodiment the first and second images may be successive images. In another embodiment, the processor may be configured to use image attributes of a first image to adjust a second image that is more than one position later in a sequence of successively exposed images.

The continuous adjustments of images in successively exposed images allows for real-time and on-the-fly exposure corrections and/or white balance corrections. For example, when shooting a video comprising successively exposed images, the exposed images may be correctly adjusted for changing characteristics of ambient light. Furthermore, when operating in live view, a user may perceive the effect of adjustments made in real-time as successively adjusted process digital images are displayed on the display 110.

In another embodiment, the ISP 246 may be configured to process the stream of supplemental image data to determine at least one image attribute or characteristic of light source of the first image and to control a camera sub-unit based on the image attribute or characteristic of light to generate raw color image data representing the second image with at least one attribute adjusted. For example, the ISP 246 may calculate an effective exposure value from supplemental image data representing intensity values of the ambient light used to expose the scene image in the first image. The ISP 246 then controls the shutter and/or aperture of the camera lens sub-unit 154 when exposing the second image such that pre-processed color component values determined from raw color image data in the second image are already adjusted to have an optimal effective exposure value.

In another embodiment, the ISP 246 may be configured to process the stream of supplemental image data to determine at least one image attribute or characteristic of light source of the first image and to control a camera sensor sub-unit based on the image attribute or characteristic of light to generate raw color image data representing the second image with at least one attribute adjusted. For example, the ISP 246 may calculate a first common exposure adjustment factor from supplemental image data representing intensity values of the ambient light used to expose the scene image in the first image. The ISP 246 then controls the gain of the VGA 242 applied to the sensor output signal 250 when generating amplified sensor output signal 252. Preferably, the ISP 246 is configured to control the VGA 242 so that the gain applied to the sensor output signal is correlated to the calculated exposure adjustment factor. Consequently, pre-processed color component values determined from raw color image data outputted from the DAC 244 are already adjusted to have an optimal effective exposure value.

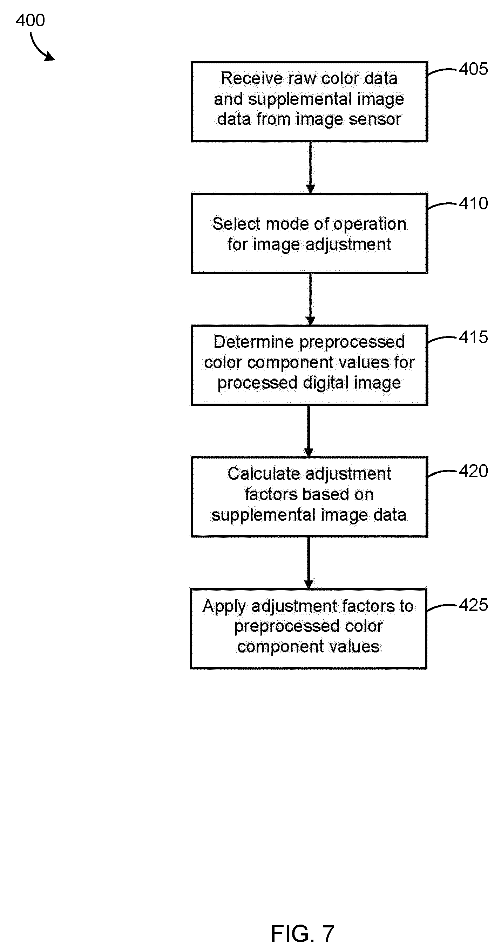

Referring now to FIG. 7, therein is illustrated a method 400 for controlling a camera unit to generated a processed digital image. The method 400 is computer implemented and may be performed by one or more components of camera unit 148 shown in FIG. 4, such as the camera controller 150 and the image sensor processor 246. Accordingly, the following description of method 400 may be abbreviated for clarity or not explicitly described. Further details of the method 400 are provided above with reference to FIG. 4 and description of the image sensor processor 246.

At 405, the ISP 246 parses the digital image data 254 outputted from the digital to analog converter 244 to receive raw color image data representing an image exposed by the image sensor and to receive supplemental image data representing at least one characteristic of a light source used to expose the scene image.

At 410, a mode of operation for image adjustment is selected by the camera controller 150 and sent to the ISP 246. The mode of operation may be selected by the user. Alternatively, the mode of operation may be selected automatically without user input by one or more components of the camera unit, such as the camera controller 150 and/or the image sensor processor 246. Multiple modes and sub-modes of operation may be defined as described above.

At step 415, the ISP 246 processes the raw image data received at step 405 to determine, for each image pixel of the processed digital image, a plurality of pre-processed color component values.

At step 420, the ISP processes the supplemental image data received at step 405 to calculate one or more adjustment factors according to the selected mode or sub-mode of operation. The calculation of the adjustment factor is based on at least one characteristic of the light source determined from the supplemental image data.

At step 425, the ISP 246 processes the raw color image data to generate the processed digital image by adjusting the pre-processed color component values associated with one or more image pixels of the processed digital image by the adjustment factors calculated at step 420.

Some example embodiments have been described herein with reference to the drawings and in terms of certain specific details to provide a thorough comprehension of the described embodiments. However, it will be understood that the embodiments described herein may be practiced in some cases without one or more of the described aspects. In some places, description of well-known methods, procedures and components has been omitted for convenience and to enhance clarity. It should also be understood that various modifications to the embodiments described and illustrated herein might be possible. The scope of the embodiments is thereby defined only by the appended listing of claims.

## Claims

1. A method for controlling a camera unit (148) to generate a processed digital image represented by a plurality of image pixels, the method comprising:
receiving raw color image data representing an image exposed by an image sensor (240), the raw color image data generated by a plurality of raw image pixels of the image sensor (240);
receiving supplemental image data representing at least one characteristic of an ambient light of the scene image, the supplemental image data being different from the raw color image data and generated by a plurality of dummy pixels of the image sensor (240) other than the raw image pixels, wherein at least one dummy pixel has a different spectral sensitivity than the raw image pixels, the spectral sensitivity including sensitivities outside the visible light spectrum;
determining a measurement of the at least one characteristic of the ambient light based on the supplemental image data and on a selected mode of operation of the image sensor processor; and
processing the raw color image data in an image sensor processor (246) of the camera unit (148), said processing comprising using the supplemental image data to adjust at least one image attribute of the raw color image data based on the measurement of the at least one characteristic of the ambient light to generate the processed digital image, the at least one image attribute being adjusted differently for different modes of operation selected.

2. The method of claim 1, wherein the processing the raw color image data further comprises determining a plurality of processed color component values associated with each pixel of the processed digital image by
for each image pixel of the processed digital image, determining an associated plurality of pre-processed color component values based on the raw color image data received prior to being processed in the image sensor processor (246), wherein the raw image data comprises a single-component value associated with each raw image pixel and the plurality of pre-processed color component values represent full color image data; and
for at least one image pixel of the processed digital image, adjusting the associated plurality of pre-processed color component values based on the supplemental image data to determine the associated plurality of processed color component values.

3. The method of claim 2, wherein for the at least one image pixel of the processed digital image, the adjusting the associated plurality of pre-processed color component values comprises scaling each of the plurality of pre-processed color component values proportionately by a common factor determined based on the supplemental image data to adjust an effective exposure value of the processed digital image;
wherein preferably the supplemental image data comprises intensity values of the ambient light in each of an ultraviolet, a visible and an infrared range of light.

4. The method of claim 2, wherein for the at least one image pixel of the processed digital image, the adjusting the associated plurality of pre-processed color component values comprises scaling each of the plurality of pre-processed color component values by corresponding factors determined based on the supplemental image data to adjust an effective white balance of the processed digital image;
wherein preferably the supplemental image data comprises intensity values of the ambient light in each of a red, a green and a blue range of visible light; and
further preferably the supplemental image data further comprises intensity values of the ambient light in each of an ultraviolet and an infrared range of light.

5. The method of any preceding claim, wherein the selected mode of operation of the image sensor processor is selected from the list comprising at least one of: an automatic exposure adjustment mode, and an automatic white balance mode.

6. The method of any one of claims 1 to 5, further comprising
receiving a stream of raw color image data representing a plurality of images comprising at least a first image and a second image successively exposed by the image sensor (240);
receiving a stream of supplemental image data representing the at least one characteristic of the ambient light for each corresponding one of the plurality of images;
processing the stream of supplemental image data to determine at least one image attribute of the first image based on a measurement of the at least one characteristic of the ambient light; and
processing the stream of raw color image data based on the at least one image attribute of the first image to adjust at least one image attribute of the second image.

7. The method of any one of claims 1 to 5, further comprising
receiving a stream of raw color image data representing a plurality of images comprising at least a first image and a second image successively exposed by the image sensor (240);
receiving a stream of supplemental image data representing the at least one characteristic of the ambient light for each corresponding one of the plurality of images;
processing the stream of supplemental image data to determine at least one image attribute of the first image based on a measurement of the at least one characteristic of the ambient light; and
controlling a camera sub-unit based on the at least one image attribute of the first image to generate the raw color image data representing the second image with at least one image attribute adjusted; and
preferably the camera sub-unit is a camera sensor sub-unit (158).

8. A camera unit (148) for generating a processed digital image represented by a plurality of image pixels, the camera unit (148) comprising means configured to perform all the steps of the method of any one of claims 1 to 5, wherein the means include:
an image sensor (240) comprising a plurality of raw image pixels and a plurality of dummy pixels other than the raw image pixels, wherein at least one dummy pixel has a different spectral sensitivity than the raw image pixels, the spectral sensitivity including sensitivities outside the visible light spectrum, the plurality of raw image pixels configured to generate raw color image data representing an image exposed by the image sensor (240), and the plurality of dummy pixels configured to generate supplemental image data representing at least one characteristic of an ambient light of the scene image, the supplemental image data being different from the raw color image data; and
an image sensor processor (246) coupled to the image sensor (240) to receive the raw color image data and the supplemental image data, the image sensor processor (246) configured to generate the processed digital image.

9. The camera unit (148) of claim 8, wherein
the image sensor (240) is configured to produce a stream of raw color image data representing a plurality of images comprising at least a first image and a second image successively exposed by the image sensor, and a stream of supplemental image data representing the at least one characteristic of the ambient light for each corresponding one of the plurality of images; and
the image sensor processor (246) is configured to process the stream of supplemental image data to determine at least one image attribute of the first image based on a measurement of the at least one characteristic of the ambient light, and to process the stream of raw color image data based on the at least one image attribute of the first image to adjust at least one image attribute of the second image.

10. The camera unit (148) of claim 8, wherein
the image sensor (240) is configured to produce a stream of raw color image data representing a plurality of images comprising at least a first image and a second image successively exposed by the image sensor, and a stream of supplemental image data representing the at least one characteristic of the ambient light for each corresponding one of the plurality of images; and
the image sensor processor (246) is configured to process the stream of supplemental image data to determine at least one image attribute of the first image based on a measurement of the at least one characteristic of the ambient light, and to control a camera sub-unit based on the at least one image attribute of the first image to generate the raw color image data representing the second image with at least one image attribute adjusted; and
preferably the camera sub-unit is a camera sensor sub-unit (158).

## Patentansprüche

1. Ein Verfahren zum Steuern einer Kameraeinheit (148), um ein verarbeitetes Digitalbild zu erzeugen, das durch eine Vielzahl von Bildpixeln dargestellt wird, wobei das Verfahren umfasst:
Erhalten roher Farbbilddaten, die ein Bild darstellen, das durch einen Bildsensor (240) belichtet wurde, wobei die rohen Bilddaten durch eine Vielzahl von rohen Bildpixeln des Bildsensors (240) erzeugt wurden;
Erhalten von zusätzlichen Bilddaten, die zumindest eine Charakteristik eines Umgebungslichts des Szenenbildes darstellen, wobei die zusätzlichen Bilddaten verschieden von den rohen Farbbilddaten sind und erzeugt wurden durch eine Vielzahl von den Dummypixeln des Bildsensors (240), die anders sind als die rohen Bildpixel, wobei zumindest ein Dummypixel eine andere spektrale Sensitivität als die rohen Bildpixel aufweist, wobei die spektrale Sensitivität Sensitivitäten außerhalb des sichtbaren Lichtspektrums aufweist;
Bestimmen einer Messung der zumindest einen Charakteristik des Umgebungslichts, basierend auf den zusätzlichen Bilddaten und einem ausgewählten Betriebsmodus des Bildsensorprozessors; und
Bestimmen der rohen Farbbilddaten in einem Bildsensorprozessor (246) der Kameraeinheit (148), wobei das Verarbeiten ein Benutzen der zusätzlichen Bilddaten umfasst, um zumindest ein Bildattribut der rohen Farbbilddaten anzupassen, basierend auf der Messung der zumindest einen Charakteristik des Umgebungslichts, um das verarbeitete Digitalbild zu erzeugen, wobei das zumindest eine Bildattribut für verschiedene ausgewählte Betriebsmoden unterschiedlich angepasst wird.

2. Das Verfahren nach Anspruch 1, wobei das Verarbeiten der rohen Farbbilddaten ferner umfasst, ein Bestimmen einer Vielzahl von verarbeiteten Farbkomponentenwerten, die mit jedem Pixel des verarbeiteten Digitalbildes assoziiert sind,
wobei für jedes Bildpixel des verarbeiteten Digitalbildes ein Bestimmen einer assoziierten Vielzahl von vorverarbeiteten Farbkomponentenwerten basiert auf den rohen Farbbilddaten, die erhalten wurden bevor sie in dem Bildsensorprozessor (246) verarbeitet wurden, wobei die rohen Bilddaten einen einkomponentigen Wert umfassen, der assoziiert ist mit jedem rohen Bildpixel, und wobei die Vielzahl von vorverarbeiteten Farbkomponentenwerten volle Farbbilddaten darstellen; und
für zumindest ein Bildpixel des verarbeiteten Digitalbildes, Anpassen der assoziierten Vielzahl von vorverarbeiteten Farbkomponentenwerten basierend auf den zusätzlichen Bilddaten, um die assoziierte Vielzahl von verarbeiteten Farbkomponentenwerten zu bestimmen.

3. Das Verfahren nach Anspruch 2, wobei für das zumindest eine Bildpixel des verarbeiteten Digitalbildes das Anpassen der assoziierten Vielzahl von vorverarbeiteten Farbkomponentenwerten ein Skalieren jedes aus der Vielzahl von vorverarbeiteten Farbkomponentenwerten proportional durch einen gemeinsamen Faktor umfasst, der bestimmt ist basierend auf den zusätzlichen Bilddaten, um einen effektiven Belichtungswert des verarbeiteten Digitalbildes anzupassen;
wobei bevorzugt die zusätzlichen Bilddaten Intensitätswerte des Umgebungslichtes in jedem eines ultravioletten, eines sichtbaren und eines infraroten Bereichs des Lichts umfassen.

4. Das Verfahren nach Anspruch 2, wobei für das zumindest eine Bildpixel des verarbeiteten Digitalbildes das Anpassen der assoziierten Vielzahl von vorverarbeiteten Farbkomponentenwerten ein Skalieren jedes aus der Vielzahl von vorverarbeiteten Farbkomponentenwerten umfasst durch korrespondierende Faktoren, die bestimmt sind basierend auf den zusätzlichen Bilddaten, um einen effektiven Weißausgleich des verarbeiteten Digitalbildes anzupassen;
wobei bevorzugt die zusätzlichen Bilddaten Intensitätswerte des Umgebungslichts in jedem aus einem roten, einem grünen und einem blauen Bereich des sichtbaren Lichts umfassen; und
ferner bevorzugt die zusätzlichen Bilddaten ferner Intensitätswerte des Umgebungslichts in jedem aus einem ultravioletten und einem infraroten Bereich des Lichts umfassen.

5. Das Verfahren nach einem der vorstehenden Ansprüche, wobei der ausgewählte Betriebsmodus des Bildsensorprozessors ausgewählt ist aus der Liste, die zumindest eines umfasst aus: einen automatischen Belichtungsanpassungsmodus und einen automatischen Weißausgleichsmodus.

6. Das Verfahren nach einem der Ansprüche 1-5, ferner umfassend
Erhalten eines Stroms von rohen Farbbilddaten, die eine Vielzahl von Bildern darstellen, die zumindest ein erstes Bild und ein zweites Bild umfasst, die nacheinander durch den Bildsensor (240) belichtet wurden;
Erhalten eines Stroms von zusätzlichen Bilddaten, der die zumindest eine Charakteristik des Umgebungslichts für jedes korrespondierende aus der Vielzahl von Bildern darstellt;
Verarbeiten des Stroms von zusätzlichen Bilddaten, um zumindest ein Bildattribut des ersten Bildes zu bestimmen, basierend auf einer Messung der zumindest einen Charakteristik des Umgebungslichts; und
Verarbeiten des Stroms von rohen Farbbilddaten basierend auf den zumindest einem Bildattribut des ersten Bildes, um zumindest ein Bildattribut des zweiten Bildes anzupassen.

7. Das Verfahren nach einem der Ansprüche 1-5, ferner umfassend
Erhalten eines Stroms von rohen Farbbilddaten, die eine Vielzahl von Bildern darstellen, die zumindest ein erstes Bild und ein zweites Bild umfassen, die nacheinander durch den Bildsensor (240) belichtet wurden;
Erhalten eines Stroms von zusätzlichen Bilddaten, der die zumindest eine Charakteristik des Umgebungslichts für jedes korrespondierende aus der Vielzahl von Bildern darstellt;
Verarbeiten des Stroms von zusätzlichen Bilddaten, um zumindest ein Bildattribut des ersten Bildes zu bestimmen, basierend auf einer Messung der zumindest einen Charakteristik des Umgebungslichts; und
Steuern einer Kamera-Subeinheit basierend auf dem zumindest einem Bildattribut des ersten Bildes, um die rohen Farbbilddaten zu generieren,
die das zweite Bild mit zumindest einem angepassten Bildattribut darstellen; und
wobei die Kamera-Subeinheit bevorzugt eine Kamerasensor-Subeinheit (158) ist.

8. Eine Kameraeinheit (148) zum Erzeugen eines verarbeiteten Digitalbildes, das dargestellt wird durch eine Vielzahl von Bildpixeln, wobei die Kameraeinheit (148) Mittel umfasst, die konfiguriert sind, um alle die Schritte des Verfahrens nach einem der Ansprüche 1-5 durchzuführen, wobei die Mittel umfassen:
einen Bildsensor (240), der eine Vielzahl von rohen Bildpixeln umfasst und eine Vielzahl von Dummypixeln, die verschieden sind von den rohen Bildpixeln, wobei zumindest ein Dummypixel eine andere spektrale Sensitivität als die rohen Bildpixel aufweist, wobei die spektrale Sensitivität Sensitivitäten außerhalb des sichtbaren Lichtspektrums aufweist, wobei die Vielzahl von rohen Bildpixeln konfiguriert ist, um rohe Farbbilddaten zu erzeugen, die ein Bild darstellen, das durch den Bildsensor (240) belichtet wurde, und wobei die Vielzahl von Dummypixeln konfiguriert ist, um zusätzliche Bilddaten zu erzeugen, die zumindest eine Charakteristik eines Umgebungslichts des Szenenbildes darstellen, wobei die zusätzlichen Bilddaten verschieden sind von den rohen Farbbilddaten; und
einen Bildsensorprozessor (246), der gekoppelt ist mit dem Bildsensor (240), um die rohen Farbbilddaten und die zusätzlichen Bilddaten zu erhalten, wobei der Bildsensorprozessor (246) konfiguriert ist, um das bearbeitete Digitalbild zu erzeugen.

9. Die Kameraeinheit (148) nach Anspruch 8, wobei
der Bildsensor (240) konfiguriert ist, um einen Strom von rohen Farbbilddaten zu produzieren, die eine Vielzahl von Bildern darstellen, die zumindest ein erstes Bild und ein zweites Bild umfassen, die nacheinander durch den Bildsensor belichtet wurden, und einen Strom von zusätzlichen Bilddaten, der die zumindest eine Charakteristik des Umgebungslichts für jedes korrespondierende aus der Vielzahl von Bildern darstellt; und
wobei der Bildsensorprozessor (246) konfiguriert ist, um den Strom von zusätzlichen Bilddaten zu verarbeiten, um zumindest ein Bildattribut des ersten Bildes zu bestimmen, basierend auf einer Messung der zumindest einen Charakteristik des Umgebungslichts, und um den Strom von rohen Farbbilddaten zu verarbeiten, basierend auf dem zumindest einem Bildattribut des ersten Bildes, um zumindest ein Bildattribut des zweiten Bildes anzupassen.

10. Die Kameraeinheit (148) nach Anspruch 8, wobei
der Bildsensor (240) konfiguriert ist, um einen Strom von rohen Farbbilddaten produzieren, die eine Vielzahl von Bildern darstellen, die zumindest ein erstes Bild und ein zweites Bild umfassen, die nacheinander durch den Bildsensor belichtet wurden, und einen Strom von zusätzlichen Bilddaten, der die zumindest eine Charakteristik des Umgebungslichts für jedes korrespondierende aus der Vielzahl von Bildern darstellt; und
wobei der Bildsensorprozessor (246) konfiguriert ist, um den Strom von zusätzlichen Bilddaten zu verarbeiten, um zumindest ein Bildattribut des ersten Bildes basierend auf einer Messung der zumindest einen Charakteristik des Umgebungslichts zu bestimmen, und um eine Kamera-Subeinheit zu steuern basierend auf dem zumindest einem Bildattribut des ersten Bildes, um die rohen Farbbilddaten zu erzeugen, die das zweite Bild darstellen, mit zumindest einem angepassten Bildattribut; und
wobei die Kamera-Subeinheit bevorzugt eine Kamerasensor-Subeinheit (158) ist.

## Revendications

1. Procédé pour commander une unité de caméra (148) afin de générer une image numérique traitée représentée par une pluralité de pixels d'image, le procédé consistant à :
recevoir des données d'images en couleurs brutes représentant une image exposée par un capteur d'images (240), les données d'images en couleur brutes étant générées par une pluralité de pixels d'images bruts du capteur d'images (240) ;
recevoir des données d'images supplémentaires représentant au moins une caractéristique d'une lumière ambiante de l'image de la scène, les données d'images supplémentaires étant différentes des données d'images en couleurs brutes et étant générées par une pluralité de pixels fictifs de capteur d'images (240), autres que les pixels d'images bruts, dans lequel au moins un pixel fictif présente une sensibilité spectrale différente de celle des pixels d'images bruts, la sensibilité spectrale comprenant des sensibilités en dehors du spectre de lumière visible ;
déterminer une mesure de l'au moins une caractéristique de la lumière ambiante sur la base des données d'images supplémentaires et d'un mode de fonctionnement sélectionné du processeur de capteur d'images ; et
traiter les données d'images en couleurs brutes dans un processeur de capteur d'images (246) de l'unité de caméra (148), ledit traitement consistant à utiliser les données d'images supplémentaires pour ajuster au moins un attribut d'image des données d'images en couleurs brutes sur la base de la mesure de l'au moins une caractéristique de la lumière ambiante afin de générer l'image numérique traitée, l'au moins un attribut d'image étant ajusté différemment pour des modes de fonctionnement sélectionnés différents.

2. Procédé selon la revendication 1, dans lequel le traitement des données d'images en couleurs brutes consiste en outre à déterminer une pluralité de valeurs de composantes de couleurs traitées associées à chaque pixel de l'image numérique traitée, cela consistant à,
pour chaque pixel d'image de l'image numérique traitée, déterminer une pluralité associée de valeurs de composantes de couleurs prétraitées sur la base des données d'images en couleur brutes reçues avant qu'elles soient traitées dans le processeur de capteur d'images (246), dans lequel les données d'images brutes comprennent une valeur de composante unique associée à chaque pixel d'image brut et la pluralité de valeurs de composantes de couleurs prétraitées représente des données d'images multicolores, et
pour au moins un pixel d'image de l'image numérique traitée, ajuster la pluralité associée de valeurs de composantes de couleurs prétraitées sur la base des données d'images supplémentaires afin de déterminer la pluralité associée de valeurs de composantes de couleurs traitées.

3. Procédé selon la revendication 2, dans lequel, pour au moins un pixel d'image de l'image numérique traitée, l'ajustement de la pluralité associée de valeurs de composantes de couleurs traitées consiste à modifier proportionnellement l'échelle de chacune de la pluralité de valeurs de composante de couleurs prétraitées selon un facteur commun déterminé sur la base des données d'images supplémentaires afin d'ajuster une valeur d'exposition effective de l'image numérique traitée ;
dans lequel les données d'images supplémentaires comprennent de préférence des valeurs d'intensité de la lumière ambiante dans chacune des gammes de lumière ultraviolette, visible et infrarouge.

4. Procédé selon la revendication 2, dans lequel, pour ledit au moins un pixel d'image de l'image numérique traitée, l'ajustement de la pluralité associée de valeurs de composantes de couleurs prétraitées consiste à modifier l'échelle de chacune de la pluralité de valeurs de composantes de couleurs prétraitées selon des facteurs correspondants déterminés sur la base des données d'images supplémentaires afin d'ajuster une balance des blancs effective de l'image numérique traitée ;
dans lequel les données d'images supplémentaires comprennent des valeurs d'intensité de la lumière ambiante dans chacune des gammes de lumière visible rouge, verte et bleue ;
de façon plus préférable, les données d'images supplémentaires comprennent en outre des valeurs d'intensité de la lumière visible dans chacune des gammes de lumière ultraviolette et infrarouge.

5. Procédé selon l'une quelconque des revendications précédentes, dans lequel le mode de fonctionnement sélectionné du processeur de capteur d'images est sélectionné dans la liste comprenant au moins l'un : d'un mode d'ajustement d'exposition automatique et d'un mode de balance des blancs automatique.

6. Procédé selon l'une quelconque des revendications 1 à 5, consistant en outre à :
recevoir un flux de données d'images en couleurs brutes représentant une pluralité d'images comprenant au moins une première image et une seconde image successivement exposées par le capteur d'images (240) ;
recevoir un flux de données d'images supplémentaires représentant ladite au moins une caractéristique de la lumière ambiante pour chaque image correspondante de la pluralité d'images ;
traiter le flux de données d'images supplémentaires afin de déterminer au moins un attribut d'image de la première image sur la base d'une mesure de ladite au moins une caractéristique de la lumière ambiante ; et
traiter le flux de données d'images en couleurs brutes sur la base dudit au moins un attribut d'image de la première image afin d'ajuster au moins un attribut d'image de la seconde image.

7. Procédé selon l'une quelconque des revendications 1 à 5, consistant en outre à :
recevoir un flux de données d'images en couleurs brutes représentant une pluralité d'images comprenant au moins une première image et une seconde image successivement exposées par le capteur d'images (240) ;
recevoir un flux de données d'images supplémentaires représentant ladite au moins une caractéristique de la lumière ambiante pour chaque image correspondante de la pluralité d'images ;
traiter le flux de données d'images supplémentaires afin de déterminer au moins un attribut d'image de la première image sur la base d'une mesure de ladite au moins une caractéristique de la lumière ambiante ; et
commander une sous-unité de caméra sur la base dudit au moins un attribut d'image de la première image afin de générer les données d'images en couleurs brutes représentant la seconde image dans laquelle au moins un attribut d'image a été ajusté ; et
la sous-unité de caméra étant de préférence une sous-unité de capteur de caméra (158).

8. Unité de caméra (148) destinée à générer une image numérique traitée représentée par une pluralité de pixels d'image, l'unité de caméra (148) comprenant des moyens configurés pour mettre en oeuvre toutes les étapes du procédé selon l'une quelconque des revendications 1 à 5, dans lequel les moyens comportent:
un capteur d'image (240) comprenant une pluralité de pixels d'images bruts et une pluralité de pixels fictifs autres que des pixels d'images bruts, dans lequel au moins un pixel fictif présente une sensibilité spectrale différente de celle des pixels d'images bruts, la sensibilité spectrale comportant des sensibilités en dehors du spectre de lumière visible, la pluralité de pixels d'image bruts étant configurés pour générer des données d'images en couleurs brutes représentant une image exposée par le capteur d'images (240), et la pluralité de pixels fictifs étant configurés de façon à générer des données d'images supplémentaires représentant au moins une caractéristique d'une lumière ambiante de l'image de la scène, les données d'images supplémentaires étant différentes des données d'images en couleurs brutes ; et
un processeur de capteur d'images (246) couplé au capteur d'images (240) pour recevoir les données d'images en couleurs brutes et les données d'images supplémentaires, le processeur de capteur d'images (246) étant configuré pour générer l'image numérique traitée.

9. Unité de caméra (148) selon la revendication 8, dans laquelle
le capteur d'images (240) est configuré pour produire un flux de données d'images en couleurs brutes représentant une pluralité d'images comprenant au moins une première image et une seconde image successivement exposées par le capteur d'images, et un flux de données d'images supplémentaires représentant ladite au moins une caractéristique de la lumière ambiante pour chaque image correspondante de la pluralité d'images ; et
le processeur de capteur d'images (246) est configuré pour traiter le flux de données d'images supplémentaires afin de déterminer au moins un attribut d'image de la première image sur la base d'une mesure de ladite au moins une caractéristique de la lumière ambiante, et pour traiter le flux de données d'images en couleurs brutes sur la base dudit au moins un attribut d'images de la première image afin d'ajuster au moins un attribut d'image de la seconde image.

10. Unité de caméra (148) selon la revendication 8, dans laquelle
le capteur d'images (240) est configuré pour produire un flux de données d'images en couleurs brutes représentant une pluralité d'images comprenant au moins une première image et une seconde image successivement exposées par le capteur d'images, et un flux de données d'images supplémentaires représentant ladite au moins une caractéristique de la lumière ambiante pour chaque image correspondante de la pluralité d'images ; et
le processeur de capteur d'images (246) est configuré pour traiter le flux de données d'images supplémentaires afin de déterminer au moins un attribut d'image de la première image sur la base d'une mesure de ladite au moins une caractéristique de la lumière ambiante, et pour commander une sous-unité de caméra sur la base dudit au moins un attribut d'image de la première image afin de générer les données d'images en couleurs brutes représentant la seconde image dans laquelle au moins un attribut d'image est ajusté ; et
la sous-unité de caméra est de préférence une sous-unité de capteur de caméra (158).
